(19) Europäisches Patentamt / European Patent Office / Office européen des brevets

(11) **EP 3 881 954 A1**

(12) **EUROPEAN PATENT APPLICATION**

(43) Date of publication:
**22.09.2021 Bulletin 2021/38**

(21) Application number: **20163471.4**

(22) Date of filing: **17.03.2020**

(51) Int Cl.:
*B22F 1/00* (2006.01)     *B22F 3/105* (2006.01)
*B33Y 10/00* (2015.01)     *B33Y 70/00* (2020.01)
*C22C 33/02* (2006.01)     *C22C 38/00* (2006.01)
*C22C 38/10* (2006.01)     *C22C 38/12* (2006.01)
*C22C 38/14* (2006.01)     *B23K 15/00* (2006.01)
*B23K 35/30* (2006.01)     *C22C 38/44* (2006.01)
*C22C 38/50* (2006.01)     *C22C 38/52* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Sandvik Machining Solutions AB
811 81 Sandviken (SE)**

(72) Inventor: **DEIRMINA, Faraz
811 81 SANDVIKEN (SE)**

(74) Representative: **Sandvik
Sandvik Intellectual Property AB
811 81 Sandviken (SE)**

(54) **A POWDER FOR ADDITIVE MANUFACTURING, USE THEREOF, AND AN ADDITIVE MANUFACTURING METHOD**

(57)     A powder for additive manufacturing, comprising, in wt.%, C<0.03; Ni 13.0-15.0; Co 13.0-14.0; Mo 7.0-8.0; Ti 0.5-0.6; and, as optionals Al 0-0.1; Cr 0.0-1.0; N 0-200 ppm; Si 0-0.10; Mn 0-0.10, balance Fe and unavoidable impurities.

EP 3 881 954 A1

**Description**

TECHNICAL FIELD

The present invention relates to a powder of a maraging steel grade tailored for additive manufacturing.
The present invention also relates to the use of such a powder in an additive manufacturing method, and an additive manufacturing method.

BACKGROUND

Maraging steels are materials that combine very high strength, hardness, and toughness. Therefore, they are employed as tool steels in the mold and die making industry, but also for high-performance parts, e.g. in the aerospace industry. They achieve their mechanical properties by a martensitic matrix that contains a high number density of nanometer-sized intermetallic precipitates. Different from most tool steels, the martensitic microstructure is not achieved by a relatively high amount of carbon in the alloy composition, but instead by (usually) a high concentration of nickel. The almost complete lack of interstitial alloying elements leads to a good weldability of this class of alloys. This, in turn, makes them amenable to metal additive manufacturing (AM) processes, in particular Laser Metal Deposition (LMD) and Selective Laser Melting (SLM). Since these processes involve a small melt pool generated by a laser beam for the consolidation of powder feedstock to a dense material, they share similarities with micro-welding processes.
One of the main strengths of AM processes is that very complex workpieces can be efficiently generated.
18Ni300 is a maraging steel grade which is approximately 100% martensitic in solution annealed condition when produced in a conventional way. Aging of the martensite to peak hardness gives rise to the precipitation of intermetallics within the martensite and negligible (up to 3 vol%) martensite-to- austenite reversion. The hardened steel reaches a hardness level of 600HV.
Table 1 shows the nominal compositions of a 18Ni300 maraging grade steel and a 13Ni400, which will also be referred to in the following.

Table 1

| Alloy | C | Ni | Co | Mo | Ti | Al | Mn | Si | Fe |
|---|---|---|---|---|---|---|---|---|---|
| 18Ni300 | <0.03 | 18.5 | 9.0 | 4.8 | 0.7 | 0.10 | <0.10 | <0.10 | Bal. |
| 13Ni400 | <0.03 | 13 | 15 | 10 | 0.2 | | <0.10 | <0.10 | Bal. |

Table 2 shows properties of conventionally produced 18Ni300 and 13Ni400.

Table 2

| Alloy | Ageing Temperature (°C) | Yield Strength (MPa) | Ultimate tensile Strength (MPa) | Fracture Toughness (MPa m$^{1/2}$) | Charpy (J) |
|---|---|---|---|---|---|
| 18Ni300 | 480 | 1835 | 1910 | 70 | 25 |
| 13Ni400 | 525 | 2350 | 2569 | 55 | - |

In additive manufacturing and in particular, laser powder bed fusion (L-PBF) technique, the material (powder) is subjected to melting followed by rapid cooling (cooling rate $10^4$-$10^6$ K/s). For a powder having the composition of a maraging steel like 18Ni300, this type of solidification gives rise to a very fine cellular/dendritic structure with a heavy micro-segregation of alloying elements to the cell boundaries. Fast solidification also promotes grain refinement and increased dislocation density within the material. In maraging steels, in particular 18Ni300, the fine grain microstructure and dislocation density increases the hardness in as-built (i.e., not age hardened) up to 70 HV in comparison with the conventionally processed and solution annealed material. (i.e., 400HV vs. 330HV).
On the other hand, the heavy micro-segregation of alloying elements (i.e. Ni, Mo and Ti) gives rise to the chemical stabilization of retained austenite up to 11 vol% (less than 90% Martensite). This retained austenite is not present in conventionally manufactured and solution annealed 18Ni300.
Up to 50% of the peak hardness (i.e., rising from 330HV to 600HV) of a 18Ni300 maraging steel is achieved by the martensite aging (heat treatment of the as-received part at 480-530°C for 2-10h), that is the precipitation of Ni$_3$(Ti, Mo) and Fe-Mo intermetallics from the martensite. The fact that the additively manufactured 18Ni300 shows the presence of up to 11% retained austenite, which remains stable during direct aging and already has trapped a considerable amount of Ni,Mo and Ti which would have otherwise contributed to aging, will negatively affect the maraging capacity of the steel in a twofold manner: i) Retained austenite doesn't contribute to aging, ii) even if the martensite is supersaturated as a result of fast solidification, and probably with a very high dislocation density (i.e., preferable sites for the nucleation of precipitates), still a considerable wt.% of alloying elements are trapped inside austenite which might cancel out the above-mentioned beneficial effects of rapid solidification. The hardness of directly aged AM-18Ni300 is equal or slightly lower than those of conventionally processed counterparts while its toughness is generally lower as a result of micro-segregation. Moreover, except for AM-13Ni400 grade powder produced by Sandvik, no other AM-Maraging steels show higher strength than that of 18Ni300, suitable for extreme duty applications, have been developed for additive manufacturing.

THE OBJECT OF THE INVENTION

It is an object of the invention to present a powder for additive manufacturing, which powder has a composition that contributes to solving the above-mentioned problems, and reduce the microsegregation effect, and thereby to enable production of a product produced by means of additive manufacturing, in particular L-PBF, of a maraging steel able of achieving high hardness due to martensite ageing by direct aging of the processed part.

SUMMARY

The object of the invention is solved by means of a powder for additive manufacturing, comprising, in wt.%,

| | |
|----|----------|
| C | <0.03 |
| Ni | 13.0-15.0 |
| Co | 13.0-14.0 |
| Mo | 7.0-8.0 |
| Ti | 0.5-0.6 |

and, as optionals

| | |
|----|----------|
| Al | 0-0.1 |
| Cr | 0.0-1.0 |
| N | 0-200 ppm |
| Si | 0-0.10 |
| Mn | 0-0.10 |

balance Fe and unavoidable impurities.

The composition according to the present invention results in a yield hardness level of 700HV (max 60 HRC) and a tensile strength of up to 2500MPa by direct aging of an article made by L-PBF. These values are at least 100 HV and 400Mpa higher than for the existing commercial additively manufactured 18Ni300. These values are comparable to the 13Ni400 grade mechanical properties while the ductility of the present steel (with the specified composition) should be higher than 13Ni400 grade as a result of reduction of Mo (compared to 13Ni400) which is known to form easy-to-coarsen Fe-Mo rich precipitates in the presence of low content of Ni and high content of Co, which are determinantal to toughness and ductility. In other words, articles produced by the new powder with modified composition compared to the 18Ni300 grade, might achieve improved ductility compared to the conventionally produced 13Ni400 grade while capable of achieving absolute strength (hardness) values of the Sandvik AM-13Ni400 grade (see table 3 above).

According to one embodiment, wt.% Ti$\leq 0.27*(10.70-$wt% Mo) when Ni is 13.0% to 13.5%.

Ti is used to form intermetallic Ni3Ti for strengthening purposes. However, a higher limit is defined which tightly correlates with Ni and Mo content to ensure a high Martensite Start temperature.

In other words, Ti and Mo are beneficial to increase the strength but an excessive amount will cause the emergence of retained austenite and enhancement of microsegregation which is not beneficial. If, for a predetermined Ni range, the Mo content is increased, the Ti content must be decreased in proportion to said increase of Mo, in order to avoid retained austenite.

According to one embodiment, wt.% Ti $\leq 0.27*(9.45-$wt% Mo) when Ni is 13.5 to 14.5%.

According to one embodiment, wt.% Ti $\leq 0.27*(8.20-$wt% Mo) when Ni is 14.5 to 15.0%.

According to one embodiment, the powder comprises 13.5-14.5 wt.% Ni.

According to one embodiment, the powder comprises 13.0-14.0 wt.% Co.

According to one embodiment, the composition of the powder is selected such that the Martensite start (Ms) temperature of the nominal composition, given that the prior austenite grain size is above 10 $\mu$m, is above 250°C.

The invention also relates to use of a powder defined hereinabove or hereinafter in an additive manufacturing process in which the powder material is subjected to melting followed by cooling with a cooling rate of $10^4$-$10^6$ K/s.

According to one embodiment, the additive manufacturing process is a process in which a laser beam is used for melting a layer of powder deposited on a substrate.

The object of the invention is also achieved by means of an additive manufacturing method in which

a) a layer of powder as defined in hereinabove or hereinafter is deposited onto a substrate,
b) at least a part of the deposited layer of the powder is molten and subjected to cooling with a cooling rated of $10^4$-$10^6$ K/s, and
c) a further layer of powder is deposited onto at least the part of the previous layer that was subjected to melting and cooling in the previous step, and
d) at least a part of the layer deposited in step c) is molten and subjected to cooling with a cooling rate of $10^4$-$10^6$ K/s, and
e) repetition of steps c) and d).

According to one embodiment,

- a laser beam is directed towards the deposited powder in steps b) and d),
- which laser beam has an energy density and is forwarded along the powder with such speed that a melt pool of molten powder having a width corresponding to a width of the laser beam is generated, wherein
- the laser energy density and the scanning speed of the laser beam is selected such that a melt pool temperature is obtained which is equal to or above a temperature at which oxides of Ti and Al in the melt pool are at least partially dissolved in the melt of the melt pool and reprecipitate in the form of nano-sized oxides upon fast solidification.

COMPOSITION ELEMENTS

Carbon: C has the function of forming martensite and carbides essential to the hardness of the steel. However, C should be below 0.03wt.% as C reacts with Ti and forms grain boundary TiC in the melt, conventionally C should be kept as low as possible in Maraging steels.

Nickel, Ni: has the function of promoting the formation of FeNi martensite in FeNi alloys on cooling and martensite to austenite reversion "upon heating". For example, the reversion temperature by incorporation of 20wt.% Ni is around 590°C making it possible to trigger the precipitation of intermetallics at lower temperatures (e.g. 480°C) from the martensite. A too low level of Ni thus results in lack of hardenability. With the selected content of Mo, a too high level of Ni, in this case over 15 wt.%, leads to the stabilization of retained austenite upon cooling.

Cobalt: Co increases the supersaturation of Mo in the matrix providing an increased amount of available Mo to take part in precipitation events. The main role of Co is in retarding the dislocation movement in the matrix and increasing the interaction energy between dislocations and interstitial atoms to reduce the brittleness at high strength levels. Moreover, Co raises the martensite start (Ms) temperature enabling addition of more age hardening alloying elements (e.g. Mo), without the risk of stabilizing residual austenite. A too low level of Co thus results in lower hardness after aging, while a too high level of Co in combination with lower than 15wt% Ni results in embrittlement.

Molybdenum: The combination of Mo and Co increases the strength of the quaternary alloys (Fe-18Ni-Co-Mo) by up to 500 MPa as a result of precipitation of Mo containing intermetallic particles.
A too low level of Mo thus results in low strength. A too high level of Mo in the presence of low Ni and high Co results in presence of undissolved coarse Fe-Mo (Laves or $\mu$ phase) intermetallic particles which reduces ductility and toughness.

Titanium: Ti is the other important alloying element which contributes to age hardening at low weight percentages (i.e., 0.2 to -2.0 wt%)
It precipitates very rapidly and completely upon aging. Ti has an important but indirect effect on the austenite reversion behavior. For the steel having a composition according to the present invention, a too low level of Ti, below 0.5 wt.%, results in low strength. A too high level of Ti, above 0.6 wt.%, results in lack of toughness at high strength levels.

Aluminium: Al is optional. Due to the affinity between Ni and Al, the amount of Ni3Ti precipitates, and thus the extent of age hardening effect, will be influenced by the variation of Al content of the steel. A too high level of Al might result in less age hardening.

Chromium: Cr is optional. It can slightly improve toughness, a too high level of Cr is believed to enhance the austenite reversion.

Nitrogen, N: is optional. It will be present in the powder as a result of Nitrogen gas atomization. N can form TiN precipitates which might negatively affect the fatigue properties of the steel. Therefore, in this case, the content of N should not be above 200 ppm.

Silicon: Si is optional and is usually regarded as an impurity element in maraging steels. A too high level might result in precipitation of $Ti_6Si_7Ni_{16}$ G phase.

Manganese, Mn: Manganese might replace Ni in the Fe-Mn-Co-Mo alloys. However, this element can be considered an impurity in the present system.

Sulphur, S: is regarded as an impurity in this context. Too much S might result in the formation of sulfides.

Phospor, P: may be regarded as an impurity in this context.

The sum of Cr, N, Si, Mn, S and P should be below 1.4 wt.%. A higher level will result in formation of nitrides and Mn inclusions.

The powder is preferably manufactured by gas atomization.

The average particle size of the powder after sieving is suitably between 15μm to 53 μm, preferably between 15 μm to 45μm. The most suitable range for the average particle size is however dependent on the type of printing machine used since different printing machines might have specific requirements for the particle size. The powder particle size distribution preferably has a median d50 of between 30-40μm.

EXAMPLES

The result of simulations made by means of Thermocalc on compositions according to the present invention are compared with the experimental data, as well as calculated values, available for steel corresponding to grades 18Ni300 and 13Ni400. The comparisons support the correctness of the theory behind the present invention.

The Thermocalc simulations and equations to estimate the yield strength of the materials built from the powder, in as-built and age hardened condition, according to the present invention and from the 18Ni300 and 13Ni400 powders have been done in the same way.

A summary of experimental and calculated results is shown in table 3:

Table 3

| | Exp. As-built yield strength (MPa) | Ex. Peak aged yield strength (MPa) | Ex. As-built Hardness (HRC) | Ex. Peak aged Hardness (HRC) | Calculated As-built yield strength (MPa) | Calculated Peak aged yield strength (MPa) |
|---|---|---|---|---|---|---|
| 18Ni300 | 1080 | 1900-2020 | 35 | 53-55 | 1170 | 1920 |
| 13Ni400 | 1280 | 2310-2480 | 41-44 | 60-61 | 1290-1310 | 2390 |
| Invention | | | | | 1180-1260 | 2280-2326 |

As can be seen in Table 3, the values achieved from the Thermocalc simulations and yield strength modeling equations of the materials built from the 18Ni300 and 13Ni400 powders corresponds well to the actual values which clearly indicates that the calculated values for the material built from the powder according to the present invention are correct.

**Method of production of samples**

It is suggested that samples are produced by means an additive manufacturing method in which

a) a layer of the powder is deposited onto a substrate,

b) the deposited layer of the powder is molten and subjected to cooling with a cooling rate of $10^4$-$10^6$ K/s, and

c) a further layer of powder is deposited onto at least the part of the previous layer that was subjected to melting and cooling in the previous step, and

d) at least a part of the layer deposited in step c) is molten and subjected to cooling with a cooling rated of $10^4$-$10^6$ K/s, and

e) repetition of steps c) and d) until a test specimen is produced.

The method includes that a laser beam is directed towards the deposited powder in steps b) and d).

Builds in 18Ni300, 13Ni400 as well as the proposed steel, can be performed in an EOS M290 L-PBF machine equipped with 400W Yb-fiber laser. The build plate can heat up to 40°C and the build can be conducted in nitrogen atmosphere (≤1000 ppm oxygen). Laser beam size is approximately 80μm, hatching distance is set to 0.11mm, and layer thickness 40μm. Stripes can be used as a scan pattern with stripe width of 5mm. The scan pattern can be rotated 67 degrees between layers. A process optimization experiment performed before deciding on the optimized processing parameters to produce the samples. An example of the process parameters is presented in Table 4. For the process optimization the widely used volumetric laser energy density (E) can be used.

$$E = \frac{P}{v \times h \times t}$$

where P is laser power (W), $v$ is the scanning speed (mm/s), h is the hatch spacing (mm), and t is layer thickness (mm). Process optimization can be performed by printing 18 cubes (15×15×15 mm3). 9 of the 18 cubes can be processed using different laser energy densities by changing the "laser power" as the only variable (i.e., P series) while the rest of the samples might be processed by changing the "scanning velocity" as the only variable (i.e., S series). Processing parameters are adjusted to yield an equal volumetric energy density for the samples sharing the same numberings (e.g., P3 and S3). A more detailed description can be found in Table 4.

*Table 4. Laser Power and Scanning speeds used in this work, please note that the nominal processing parameter used to print 18Ni300 is P4, S4 which was used to print the first batch of 13Ni400 samples in this report*

| sample | Laser power (W) | Laser speed (mm/s) | sample | Laser power (W) | Laser speed (mm/s) |
|---|---|---|---|---|---|
| **P1** | 345 | 960 | **S1** | 285 | 793 |
| **P2** | 325 | 960 | **S2** | 285 | 842 |
| **P3** | 305 | 960 | **S3** | 285 | 897 |
| **P4** | 285 | 960 | **S4** | 285 | 960 |
| **P5** | 265 | 960 | **S5** | 285 | 1032 |
| **P6** | 245 | 960 | **S6** | 285 | 1117 |
| **P7** | 225 | 960 | **S7** | 285 | 1216 |
| **P8** | 205 | 960 | **S8** | 285 | 13345 |
| **P9** | 185 | 960 | **S9** | 285 | 1479 |

**Claims**

1. A powder for additive manufacturing, comprising, in wt.%,

| | |
|---|---|
| C | <0.03 |
| Ni | 13.0-15.0 |
| Co | 13.0-14.0 |
| Mo | 7.0-8.0 |
| Ti | 0.5-0.6 |

and, as optionals

| | |
|---|---|
| Al | 0-0.1 |
| Cr | 0.0-1.0 |
| N | 0-200 ppm |
| Si | 0-0.10 |
| Mn | 0-0.10 |

balance Fe and unavoidable impurities.

2.  A powder according to claim 1, wherein
    wt.% Ti$\leq$ 0.27*(10.70-wt% Mo) when Ni is 13.0% to 13.5%.

3.  A powder according to claim 1 or 2, wherein
    wt.% Ti $\leq$ 0.27*(9.45-wt% Mo) when Ni is 13.5 to 14.5%.

4.  A powder according to any one of claims 1-3, wherein
    wt.% Ti $\leq$ 0.27*(8.20-wt% Mo) when Ni is 14.5 to 15.0%.

5.  A powder according to any one of claims 1-4, comprising 13.5-14.5 wt.% Ni.

6.  A powder according to any one of claims 1-5, comprising 13.0-14.0 wt.% Co.

7.  Use of a powder according to any one of claims 1-6, in an additive manufacturing process in which the powder material is subjected to melting followed by cooling with a cooling rate of $10^4$-$10^6$ K/s.

8.  Use according to claim 7 wherein the additive manufacturing process is a process in which a laser beam is used for melting a layer of powder deposited on a substrate.

9.  An additive manufacturing method in which

    a) a layer of powder according to any one of claims 1-6 is deposited onto a substrate,
    b) at least a part of the deposited layer of the powder is molten and subjected to cooling with a cooling rated of $10^4$-$10^6$ K/s, and
    c) a further layer of powder is deposited onto at least the part of the previous layer that was subjected to melting and cooling in the previous step, and
    d) at least a part of the layer deposited in step c) is molten and subjected to cooling with a cooling rated of $10^4$-$10^6$ K/s, and
    e) repetition of steps c) and d).

10. A method according to claim 9, wherein

    - a laser beam is directed towards the deposited powder in steps b) and d),
    - which laser beam has an energy density and is forwarded along the powder with such speed that a melt pool of molten powder having a width corresponding to a width of the laser beam is generated, wherein
    - the Laser energy density and the scanning speed of the laser beam is selected such that a melt pool temperature is obtained which is equal to or above a temperature at which oxides of Ti and Al in the melt pool are at least partially dissolved in the melt of the melt pool and reprecipitate in the form of nano-sized oxides upon fast solidification.

Europäisches
Patentamt

European
Patent Office

Office européen
des brevets

# EUROPEAN SEARCH REPORT

Application Number

EP 20 16 3471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/236532 A1 (FORSMARK JOY HINES [US] ET AL) 23 August 2018 (2018-08-23) <br> * paragraph [0034] - paragraph [0038] * <br> * figure 1 * <br> * claims 1-6 * | 1-10 | INV. <br> B22F1/00 <br> B22F3/105 <br> B33Y10/00 <br> B33Y70/00 <br> C22C33/02 |
| A | EP 1 930 456 A2 (DEUTSCHE EDELSTAHLWERKE GMBH [DE]) 11 June 2008 (2008-06-11) <br> * paragraph [0031] - paragraph [0032] * <br> * claims 1-16 * | 1-10 | C22C38/00 <br> C22C38/10 <br> C22C38/12 <br> C22C38/14 |
| A | PHILIPP STOLL ET AL: "SLM Processing of 14 Ni (200 Grade) Maraging Steel", DDMC 2016: PROCEEDINGS OF THE 3RD FRAUNHOFER DIRECT DIGITAL MANUFACTURING CONFERENCE, 17 March 2016 (2016-03-17), XP055716357, DOI: 10.3929/ethz-a-010802372 ISBN: 978-3-8396-1001-5 <br> * Section 2; <br> page 2 - page 3 * <br> * table 1 * | 1-10 | ADD. <br> B23K15/00 <br> B23K35/30 <br> C22C38/44 <br> C22C38/50 <br> C22C38/52 |
| A | Anonymous: "Material data sheet -FlexLine", EOS Gmbh-Electro Optical Systems, 1 April 2017 (2017-04-01), XP055597497, Retrieved from the Internet: URL:https://cdn.eos.info/c5f087fc5431c4f6/1069a43d2f7a/MS-MS1-M400_Material_data_sheet_ENG.pdf [retrieved on 2019-06-18] <br> * page 1 * | 1-10 | TECHNICAL FIELDS SEARCHED (IPC) <br> B22F <br> B33Y <br> C22C <br> B23K |
| A | EP 1 094 125 A1 (SUMITOMO SPEC METALS [JP]) 25 April 2001 (2001-04-25) <br> * claims 1-6 * <br> * tables 1, 11 * | 1-10 | |

The present search report has been drawn up for all claims

| Place of search | Date of completion of the search | Examiner |
|---|---|---|
| The Hague | 20 July 2020 | Neibecker, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 3471

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2020

| Patent document cited in search report | | Publication date | Patent family member(s) | | Publication date |
|---|---|---|---|---|---|
| US 2018236532 | A1 | 23-08-2018 | NONE | | |
| EP 1930456 | A2 | 11-06-2008 | DE 102006058066 | B3 | 14-08-2008 |
| | | | EP 1930456 | A2 | 11-06-2008 |
| EP 1094125 | A1 | 25-04-2001 | EP 1094125 | A1 | 25-04-2001 |
| | | | US 6776855 | B1 | 17-08-2004 |
| | | | US 2007295430 | A1 | 27-12-2007 |
| | | | WO 0056944 | A1 | 28-09-2000 |

EPO FORM P0459

For more details about this annex : see Official Journal of the European Patent Office, No. 12/82